# EUROPEAN PATENT APPLICATION

(11) **EP 4 417 422 A1**
(43) Date of publication of application: **21.08.2024**
(21) Application number: 24157759.2
(22) Date of filing: 15.02.2024
(51) Int. Cl.: B33Y 80/00, B60K 11/04, B62D 21/17, F28F 7/02

(54) **REAR FRAME ASSEMBLY EQUIPPED WITH AN INTEGRATED HEAT EXCHANGER AND MOTOR VEHICLE COMPRISING THE SAME**

(30) Priority: 16.02.2023 IT 202300002640
(71) Applicant: FERRARI S.p.A., 41100 Modena (IT)
(72) Inventor: MERULLA, Andrea, 41100 MODENA (IT)
(74) Representative: Studio Torta S.p.A.

(57) **Abstract**

A frame assembly (10; 10'; 10") for a motor vehicle (1; 1'; 1") comprising a transversal element (11; 11'; 1") extending crosswise to a longitudinal extension direction (X) of the motor vehicle (1; 1'; 1") and a heat exchange device (12; 12'; 12") for the exchange of heat between a first fluid and a second fluid. The transversal element (11; 11'; 11") comprises a housing (60), which accommodates, on the inside, the heat exchange device (12; 12'; 12").

## Description

### CROSS-REFERENCE TO RELATED APPLICATIONS

This patent application claims priority from Italian patent application no. 102023000002640 filed on February 16, 2023, the entire disclosure of which is incorporated herein by reference.

### TECHNICAL FIELD

The invention relates to a rear frame assembly for a motor vehicle. The invention further relates to a motor vehicle comprising a rear frame assembly.

### BACKGROUND

Motor vehicles are known, which comprise heat exchange devices adapted to ensure the exchange of heat energy between two fluids or between a fluid and a portion of the motor vehicles. Said heat exchange devices can be used for several purposes, for instance for cooling the batteries or the engine of the motor vehicles.

The weight of said devices and of the other components of the vehicle that help carry out the heat exchange significantly affects the overall weight of the motor vehicles and, therefore, at least indirectly increases the quantity of polluting substances released by the motor vehicles.

Owing to the above, known motor vehicles need to be improved in order to obtain a reduction in terms of weight.

Therefore, the object of the invention is to fulfil the need discussed above, preferably in a simple and reliable fashion.

### DESCRIPTION OF THE INVENTION

Said object is reached by a frame assembly for a motor vehicle as defined in claim 1. The dependent claims define special embodiments of the invention.

### BRIEF DESCRIPTION OF THE DRAWINGS

Hereinafter, three embodiments of the invention will be described, in order to allow the latter to be better understood, by way of non-limiting examples and with reference to the accompanying drawings, wherein:
- Figure 1 is a view from the bottom of a portion of a motor vehicle comprising a rear frame assembly according to a first embodiment of the present invention and with parts removed for greater clarity;
- Figure 2 is a perspective view of the rear frame assembly of Figure 1 on a larger scale;
- Figure 3 is a cross section of the rear frame assembly of Figures 1 and 2;
- Figure 4 is a perspective view of a portion of the rear frame assembly of Figures 1 and 3 on a significantly larger scale;
- Figure 5 is a perspective view of a motor vehicle comprising a rear frame assembly according to a second embodiment of the present invention and with parts removed for greater clarity;
- Figure 6 is a perspective view of a portion of a rear frame assembly according to a third embodiment of the present invention;
- Figure 7 is a lateral view of the portion of the rear frame assembly shown in Figure 6; and
- Figure 8 is a perspective and detail view of the portion of the rear frame assembly shown in Figures 6 and 7.

### EMBODIMENTS OF THE INVENTION

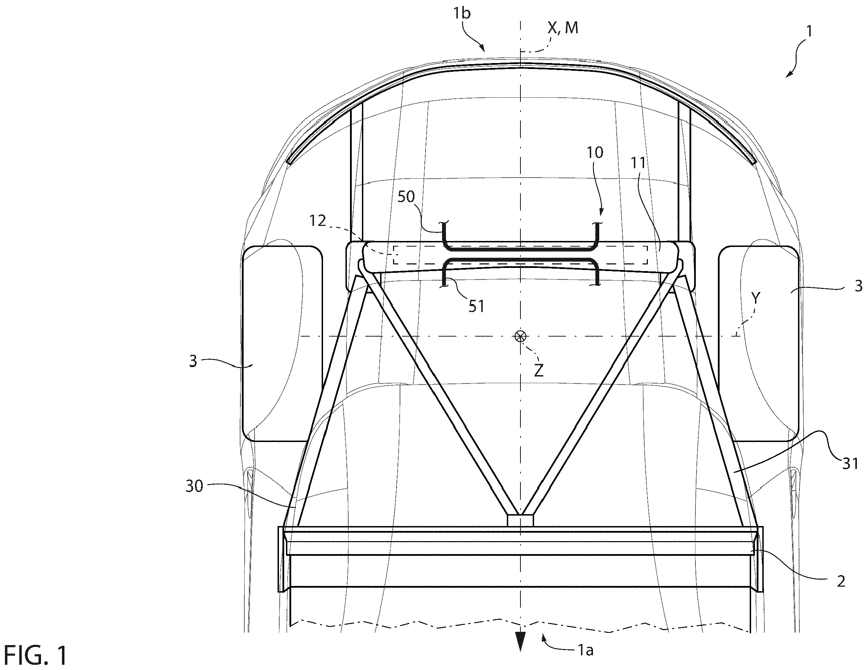

In figure 1, reference number 1 is used to indicate, as a whole, a motor vehicle comprising:
- a frame 2;
- a plurality of wheels 3, which can rotate around respective rotational axes relative to the frame 2 and are adapted to move the frame 2 relative to the ground on which they rest; and
- driving means - not shown - adapted to cause the wheels 3 to rotate around the respective rotational axes.

The vehicle 1 comprises a front portion 1a and a rear portion 1b opposite one another along a longitudinal direction X of the vehicle. Specifically, considering a normal travel direction of the vehicle 1 (see the arrow of Figure 1 corresponding to the direction X), said travel direction is oriented from the rear portion 1b to the front portion 1a.

The frame 2 comprises, in turn, a rear frame assembly 10, which is arranged at the rear portion 1b (Figure 1).

The rear frame assembly 10 advantageously comprises a transversal element 11 extending crosswise to the direction X and a heat exchange device 12 for the exchange of heat between a first fluid and a second fluid; the transversal element 11 comprises a housing 60, wherein the heat exchange device 12 is accommodated and fixed or integrated.

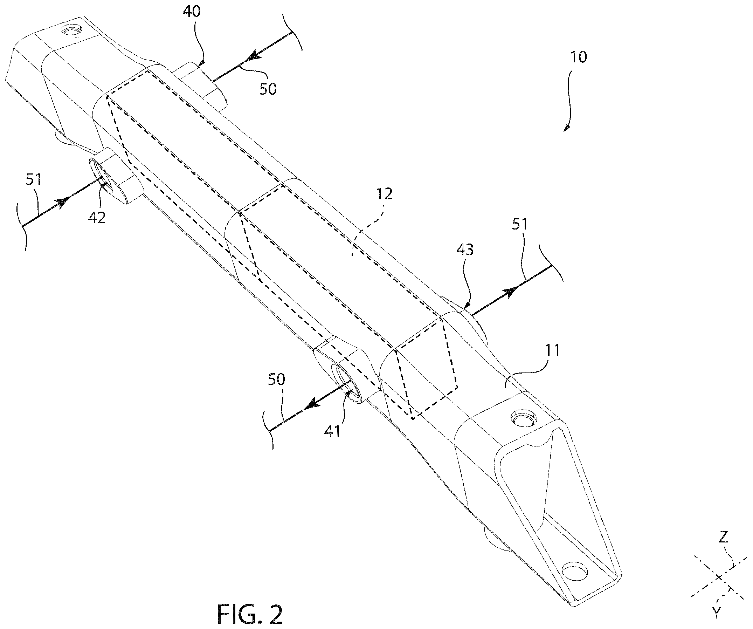

The vehicle 1 further comprises a first circuit 50, where the first fluid flows, and a second circuit 51, where the second fluid flows (both circuits being only schematically shown in Figures 1 and 2). In particular, the heat exchange device 12 is crossed both by the first circuit 50 and the second circuit 51.

As shown in Figure 1, the transversal element 11 extends parallel to a direction Y orthogonal to the direction X. It is further possible to define a direction Z vertical to the ground on which the wheels 3 rest and orthogonal to the directions X and Y.

The transversal element 11 specifically has a straight development. The transversal element 11 could alternatively have the development of a broken line in a plane parallel to the directions X and Y or a curved development.

The frame 2 comprises two truss elements 30, 31 extending crosswise to the direction X and arranged in a symmetrical manner relative to a middle plane M of the vehicle 1 along the direction Y and parallel to the directions X and Z (Figure 1). The transversal element 11 is fixed to the truss elements 30, 31 at respective ends of the truss elements 30, 31 along the direction X arranged on the side of the portion 1b. The transversal element 11 is interposed between the truss elements 30, 31 along the direction Y (Figure 1).

The heat exchange device 12 comprises a plurality of ducts 13, where the first fluid flows, and a plurality of ducts 14, where the second fluid flows. In particular, the ducts 13 are part of the first circuit 50 and the ducts 14 are part of the second circuit 51. In addition, the ducts 13 are fluidly isolated from the ducts 14.

Preferably, though not necessarily, the first and the second fluid are in the liquid state. Furthermore, the first and the second fluid could be the same or be different from one another. By way of example, the first and/or the second fluid could be water, a water solution or oil. Alternatively, at least one of the first fluid and the second fluid is in the gaseous state.

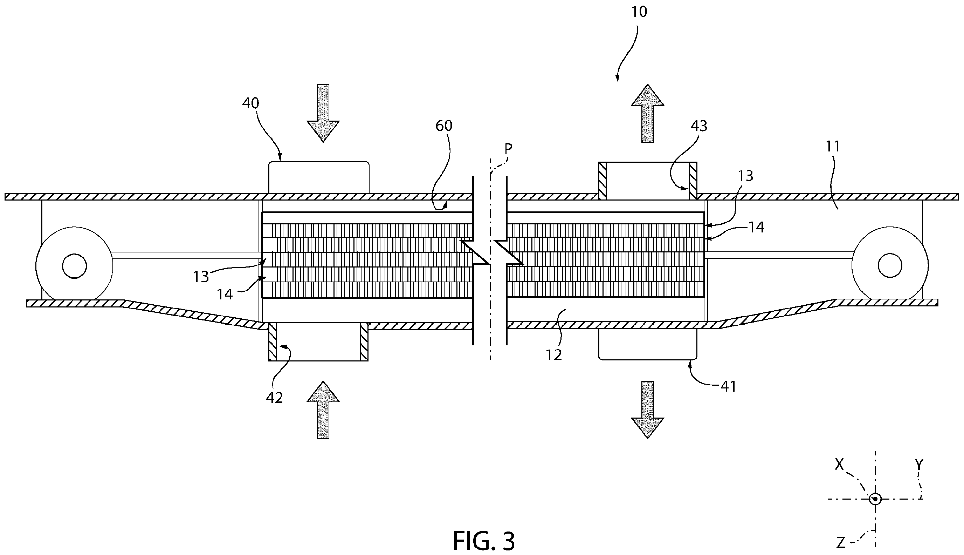

The heat exchange device 12 is a countercurrent heat exchanger. In detail, as shown in Figure 3, the rear frame assembly 10 comprises:
- an opening 40 to let the first fluid into the heat exchange device 12;
- an opening 41 to let the first fluid out of the heat exchange device 12;
- an opening 42 to let the second fluid into the heat exchange device 12; and
- an opening 43 to let the second fluid out of the heat exchange device 12.

In detail, the openings 40, 41, 42 and 43 are arranged at the transversal element 11. More in detail, the openings 40 and 41 are arranged at respective opposite sides of the transversal element 11 relative to a middle plane P of the heat exchange device 12 orthogonal to the direction Y. Similarly, the openings 42 and 43 are arranged at respective opposite sides of the transversal element 11 relative to the plane P. In addition, the openings 40 and 42 are aligned with one another parallel to the direction Z and the openings 43 and 41 are also aligned parallel to the direction Z. Furthermore, the openings 40, 41, 42 and 43 are arranged like and X (namely, like a chiasmus) relative to the centre of mass of the rear frame assembly 10 (Figure 3) .

The openings 40 and 41 are fluidly connected to one another by means of the ducts 13; the openings 42 and 43 are fluidly connected to one another by means of the ducts 14.

The heat exchange device 12 comprises a lattice structure 20 comprising repeated unit cells made up of structural elements (for example, truss elements) and defining the ducts 13 and 14.

The rear frame assembly 10, as a whole, is preferably manufactured by means of additive manufacturing, for example by means of selective laser melting of metal powders. Alternatively, the sole heat exchange device 12 is manufactured by means of additive manufacturing or the sole lattice structure 20 is manufactured by means of additive manufacturing.

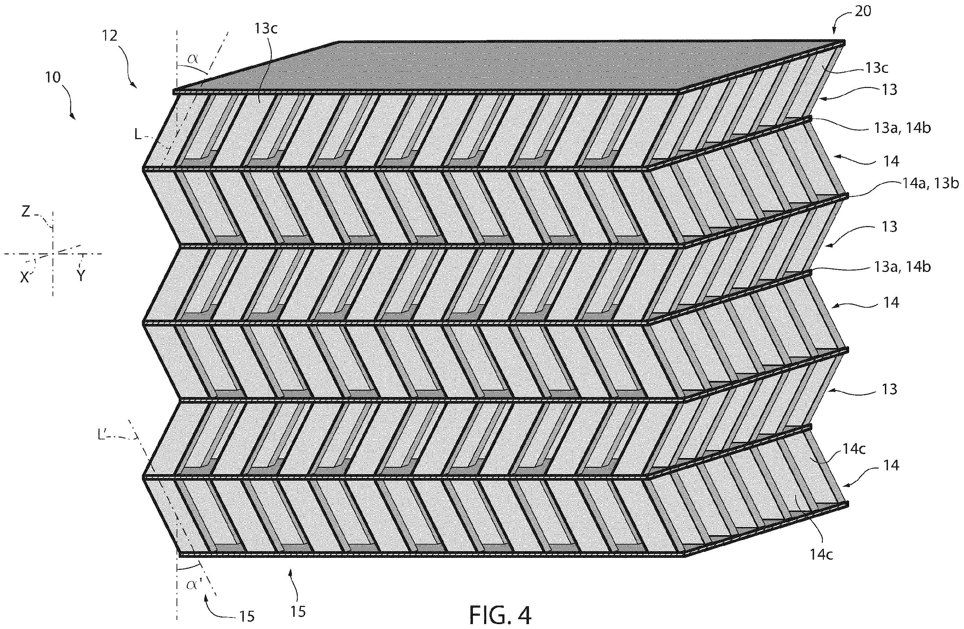

In the embodiment shown in Figure 4, the lattice structure 20 comprises the ducts 13 and 14 arranged in an alternated manner parallel to the direction Z. The ducts 13 are fluidly connected to one another and the ducts 14 are fluidly connected to one another.

In detail, each duct 13 comprises:
- a flat plate 13a preferably orthogonal to the direction Z;
- a flat plate 13b, which is parallel to the plate 13a and spaced apart from it along the direction Z; and
- a plurality of fins 13c interposed between the plate 13a and the respective plate 13b along said direction Z.

More in detail, the first fluid is adapted to flow through each duct 13 in the space defined by the relative plate 13a, the relative plate 13b and the relative fins 13c.

Each duct 14 comprises:
- a flat plate 14a preferably orthogonal to the direction Z;
- a flat plate 14b, which is parallel to the plate 14a and spaced apart from it along the direction Z; and
- a plurality of fins 14c interposed between the plate 14a and the respective plate 14b along said direction Z.

More in detail, taking into account a duct 13 interposed between two ducts 14 along the direction Z, the duct 13 shares the plate 13a with the duct 14 located under it along the direction Z and the plate 13b with the duct 14 located above it along the direction Z. Specifically, the plate 13a corresponds to the plate 14b of the duct 14 located under it and the plate 13b corresponds to the plate 14a of the duct 14 located above it. As a consequence, the plates 13a, 13b, 14a, 14b define heat exchange surfaces for the exchange of heat between the first fluid and the second fluid.

The fins 13c are basically two-dimensional flat elements, namely having a main extension along two dimensions and an insignificant extension along the third dimension. The fins 13c serve the purpose of supporting the relative plate 13b with respect to the relative plate 13a. In the embodiment shown herein, the flat surfaces of the fins 13c are parallel to one another.

More in detail, each duct 13 comprises a plurality of rows 15 of fins 13c aligned with one another along the direction X. The rows 15 are parallel to one another and spaced apart from one another along the direction Y.

Taking into account a middle line L of the fins 13c in a plane parallel to the directions Y and Z, said middle line L is preferably inclined relative to the direction Z at an angle α.

The fins 14c are similar to the fins 13c and the only difference lies in the fact that, considering a middle line L' of the fins 14c along a plane parallel to the directions Y and Z, said middle line L' is inclined relative to the direction Z at an angle α'.

In the embodiment shown in Figure 4, the angles α and α' are equal in absolute value, but opposite relative to the direction Z. In other words, the inclination of the fins 13c is contrary to the inclination of the fins 14c relative to the direction Z.

Alternatively or in addition, the lattice structure 20 comprises surfaces with the shape of gyroids and/or arranged in a honeycomb pattern and/or arranged in a diamond TPMS (Triply Periodic Minimal Surface) pattern and/or arranged in an octagon pattern. The aforesaid surfaces define the ducts 13, 14 and the relative heat exchange surfaces.

According to an embodiment which is not shown herein, the lattice structure 20 comprises:
- unit cells of a first type, which comprise structural elements that are optimized for the exchange of heat between the first and the second fluid (for instance, having surfaces with the shape of gyroids);
- unit cells of a second type other than the first type, which comprise structural elements that are optimized for the structural resistance of the heat exchange device 12 (for instance, having surfaces arranged in a honeycomb pattern).

Furthermore, the lattice structure 20 is preferably made of an aluminium alloy.

As shown in Figure 1, the heat exchange device 12 substantially has the shape of a parallelepiped and mainly extends parallel to the direction Y.

Furthermore, the heat exchange device 12 preferably is arranged in a symmetrical manner relative to the middle plane M. Furthermore, the extension of the heat exchange device 12 along the direction Y is smaller than the extension of the transversal element 11 along the direction Y.

As shown in Figure 3, the housing 60 defines a closed volume with the shape of a parallelepiped and the transversal element 11 completely encloses the heat exchange device 12 in the housing 60.

Alternatively, the housing 60 is a seat of the transversal element 11 and only partially accommodates the heat exchange device 12. In particular, according to this alternative embodiment, the heat exchange device 12 extends in part out of the housing 60.

During the operation, the first fluid flows inside the first circuit 50 and the second fluid flows inside the second circuit 51. In detail, while flowing through the heat exchange device 12, the first fluid flows in from the opening 40, flows through the ducts 13 and flows out of the opening 41; the second fluid flows in from the opening 42, flows through the ducts 14 and flows out of the opening 43 (Figure 3).

More in detail, the first fluid flows in the space defined by the plates 13a, 13b and the fins 13c and the second fluid flows in the space defined by the plates 14a, 14b and the fins 14c. In the meantime, the first and the second fluid exchange heat energy with each other through the plates 13a, 13b; 14a, 14b.

During the exchange of heat, the transversal element 11 supports the heat exchange device 12.

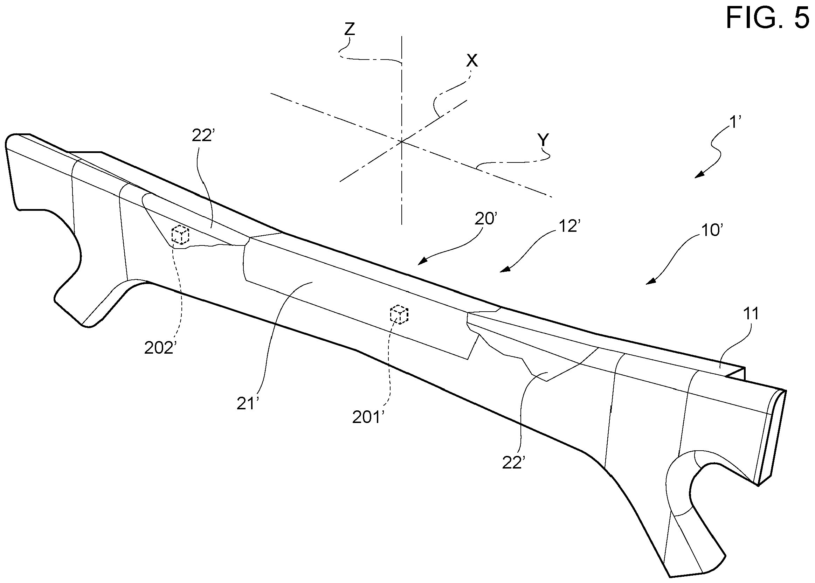

With reference to Figure 5, 1' denotes a motor vehicle according to a second embodiment of the present invention. Motor vehicle 1' is similar to motor vehicle 1 and will be described in the following only insofar as it differs from the latter; equal or equivalent parts of motor vehicles 1; 1' will be marked, where possible, by the same reference numerals.

Motor vehicle 1' differs from motor vehicle 1 in that it comprises a rear frame assembly 10' instead of rear frame assembly 10. Rear frame assembly 10' is similar to rear frame assembly 10 and will be described in the following only insofar as it differs from the latter; equal or equivalent parts of rear frame assemblies 10; 10' will be marked, where possible, by the same reference numerals.

Rear frame assembly 10' differs from rear frame assembly 10 in that it comprises a lattice structure 20' instead of lattice structure 20. Lattice structure 20' comprises:
- unit cells 201' of a first type (one of which is only schematically shown in Figure 5), which comprise structural elements that are optimized for the exchange of heat between the first and the second fluid (for instance, having surfaces with the shape of gyroids or in a honeycomb pattern);
- unit cells 202' of a second type (one of which is only schematically shown in Figure 5) other than the first type, which comprise structural elements that are optimized for the structural resistance of the heat exchange device 12' (for instance, having surfaces arranged in a honeycomb pattern or with the shape of gyroids).

More specifically, unit cells 202' of the second type also contribute to heat exchange.

In detail, lattice structure 20' comprises:
- a portion 21', which comprises unit cells 201' of the first type; and
- two portions 22', which comprise unit cells 202' of the second type.

In further detail, portion 21' is interposed between the two portions 22' along direction Y.

In addition, portion 21' has a parallelepiped or substantially parallelepiped shape.

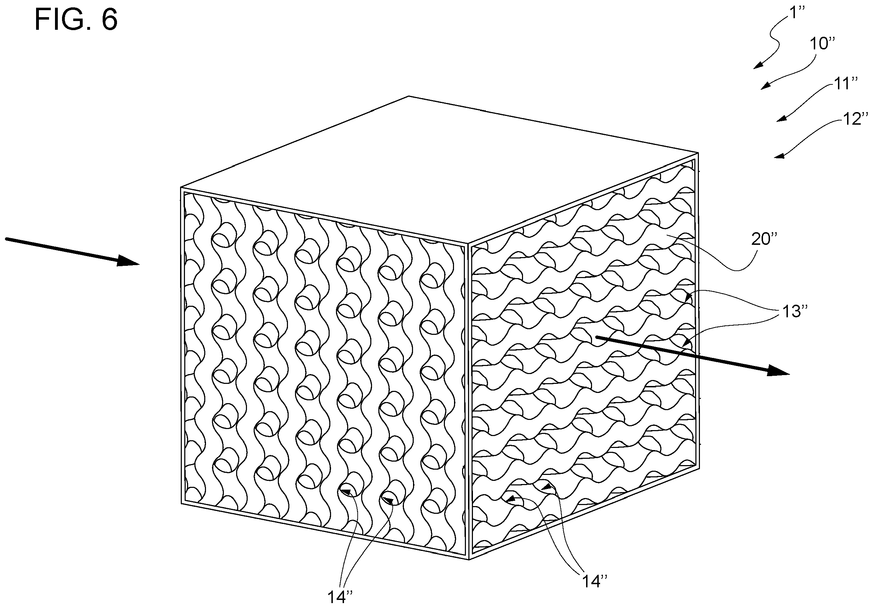

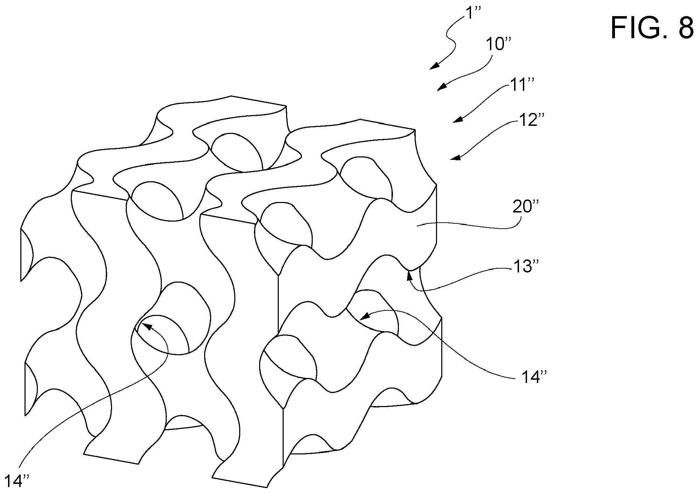

With reference to Figures 6, 7 and 8, 1" denotes a motor vehicle according to a third embodiment of the present invention. Motor vehicle 1" is similar to motor vehicle 1 and will be described in the following_only insofar as it differs from the latter; equal or equivalent parts of motor vehicles 1; 1" will be marked, where possible, by the same reference numerals.

Motor vehicle 1" differs from motor vehicle 1 in that it comprises a rear frame assembly 10" instead of rear frame assembly 10. Rear frame assembly 10" is similar to rear frame assembly 10 and will be described in the following only insofar as it differs from the latter; equal or equivalent parts of rear frame assemblies 10; 10" will be marked, where possible, by the same reference numerals.

Rear frame assembly 10'' differs from rear frame assembly 10 in that it comprises a lattice structure 20" instead of lattice structure 20. Lattice structure 20" comprises gyroid shaped surfaces defining the ducts 13'', 14" and the relative heat exchange surfaces.

Ducts 13'' are fluidically connected to one another and ducts 14'' are fluidically connected to one another.

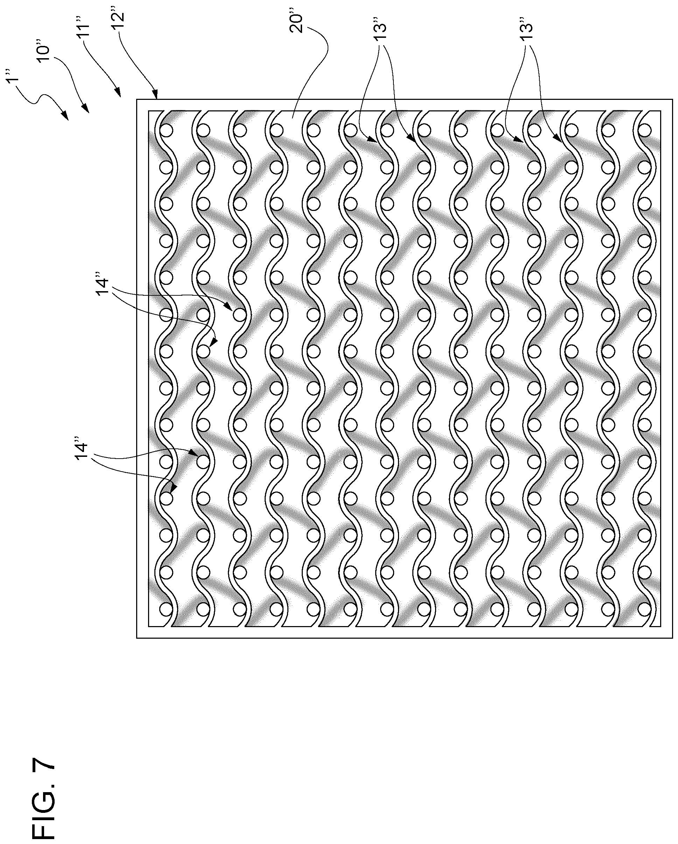

In addition, as show in Figure 7, each duct 13" is crossed by a plurality of ducts 14". More specifically, ducts 13" and 14" are arranged transversally to one another.

Owing to the above, the advantages of the rear frame assembly 10; 10'; 10" and of the motor vehicle 1; 1'; 1" according to the invention are evident.

Since the rear frame assembly 10; 10'; 10" comprises the transversal element 11; 11'; 11" and the heat exchange device 12; 12'; 12'', which is at least partially accommodated in the housing 60 of the transversal element 11; 11'; 1", the weight of the vehicle 1; 1'; 1" is smaller compared to known vehicles discussed in the introductory part of the description. As a matter of fact, since the heat exchange device 12; 12'; 12" benefits from the structural features of the transversal element 11; 11'; 11", the heat exchange device 12; 12'; 12" itself can be manufactured with less noble structural features compared to known heat exchange devices and/or does not require the use of stiffening elements.

In addition, the integration of the heat exchange device 12; 12'; 12" in the transversal element 11; 11'; 11" improves the layout of the entire vehicle 1; 1'; 1".

Since the rear frame assembly 10; 10'; 10", the heat exchange device 12; 12'; 12" or the lattice structure 20; 20'; 20'' are manufactured by means of additive manufacturing, the shape of the heat exchange surfaces of the ducts 13; 13" and 14; 14" can be chosen so as to maximize the extent of the exchange of heat between the first and the second fluid.

Since the lattice structure 20; 20'; 20" comprises unit cells of two different types, it is possible to optimize the exchange of heat and the structural resistance in different regions of the heat exchange device 12; 12'; 12".

Finally, the rear frame assembly 10; 10'; 10" and the motor vehicle 1; 1'; 1" according to the invention can be subjected to changes and variants, which, though, do not go beyond the scope of protection set forth in the appended claims.

In particular, the number and the shape of the components described and shown herein could be different and, in particular, could be changed with a great degree of freedom.

According to an alternative which is not shown herein, the frame assembly 10; 10'; 10" could be arranged at the front portion 1a, thus being a front frame assembly.

The vehicle 1; 1'; 1" could comprise more than one rear frame assembly 10; 10'; 10". Furthermore, each rear frame assembly 10; 10'; 10" could comprise more than one heat exchange device 12; 12'; 12".

The heat exchange device 12; 12'; 12" could comprise one single duct 13; 13" and/or one single duct 14; 14".

In addition, the lattice structure might comprise unit cells of a third type defining the ducts 13; 13" and unit cells of a fourth type different from the third type and defining ducts 14; 14".

## Claims

1. Frame assembly (10; 10'; 10") for a motor vehicle (1; 1'; 1"); said motor vehicle (1; 1'; 1") defining a longitudinal extension direction (X);
said frame assembly (10; 10'; 10") comprising:
- a transversal element (11; 11'; 11") extending transversally to said longitudinal extension direction (X);
- a heat exchange device (12; 12'; 12") between a first fluid and a second fluid;
wherein said transversal element (11; 11'; 1") comprises a housing (60) inside which said heat exchange device (12; 12'; 12") is housed.

2. Frame assembly according to claim 1, wherein said heat exchange device (12; 12'; 12") comprises:
- at least one first duct (13; 13") adapted to be crossed, in use, by said first fluid;
- at least one second duct (14; 14") adapted to be crossed, in use, by said second fluid;
said first duct (13; 13") and said second duct (14; 14") being fluidly isolated from each other;
said heat exchange device (12; 12'; 12") comprising a lattice structure (20; 20'; 20") defining said at least one first duct (13; 13") and said at least one second duct (14; 14").

3. Frame assembly according to claim 2, **characterized in that** it is manufactured by additive manufacturing, or wherein said heat exchange device (12; 12'; 12") is manufactured by additive manufacturing, or wherein said lattice structure (20; 20'; 20") is manufactured by additive manufacturing.

4. Frame assembly according to claim 2 or 3, wherein said heat exchange device (12) comprises a plurality of said first ducts (13) and a plurality of said second ducts (14) alternated with one another parallel to a second direction (Z); said second direction (Z) being orthogonal to said longitudinal extension direction (X);
said first ducts (13) being fluidly connected to one another; said second ducts (14) being fluidly connected to one another.

5. Frame assembly according to claim 4, wherein each said first duct (13) comprises:
- a first plate (13a), which is flat;
- a second plate (13b), which is flat, parallel to said first plate (13a) and distanced therefrom along said second direction (Z); and
- a plurality of first fins (13c) interposed between said first plate (13a) and the respective second plate (13b) along said second direction (Z);
each said second duct (14) comprising:
- a third plate (14a), which is flat;
- a fourth plate (14b), which is flat, parallel to said third plate (14a) and distanced therefrom along said second direction (Z); and
- a plurality of second fins (14c) interposed between said third plate (14a) and the respective fourth plate (14b) along said second direction (Z);
said first, second, third and fourth plates (13a, 13b, 14a, 14b) defining, in use, heat exchange surfaces between said first fluid and said second fluid.

6. Frame assembly according to any one of claims 2 to 5, wherein said lattice structure (20; 20'; 20") comprises gyroid shaped surfaces and/or surfaces arranged in a honeycomb pattern and/or surfaces arranged in a diamond pattern and/or surfaces arranged in an octet pattern; said surfaces defining said first and second ducts (13, 14; 13", 14").

7. Frame assembly according to claim 6, wherein said lattice structure (20; 20'; 20") is composed by repeated unit cells comprising said surfaces; said lattice structure (20; 20'; 20") comprising unit cells of a first type and unit cells of a second type different from the first type.

8. Motor vehicle (1; 1'; 1") comprising:
- a frame (2);
- a plurality of wheels (3) rotatable about respective rotational axes to move said frame (2) relative to the ground;
said frame (2) comprising a frame assembly (10; 10'; 10") according to any one of the foregoing claims.

9. Motor vehicle according to claim 8, comprising a first circuit (50) wherein said first fluid flows, in use, and a second circuit (51) wherein said second fluid flows, in use;
said first circuit (50) comprising said at least one first duct (13; 13") and said second circuit (51) comprising said at least one second duct (14; 14").
